Europäisches Patentamt

European Patent Office

Office européen des brevets

(19)

(11) Veröffentlichungsnummer: **0 106 343**
**B1**

# (12) EUROPÄISCHE PATENTSCHRIFT

(45) Veröffentlichungstag der Patentschrift:
06.08.86

(21) Anmeldenummer: 83110312.2

(22) Anmeldetag: 15.10.83

(51) Int. Cl.⁴: **A 01 F 12/16**

(54) **Steinfangvorrichtung für Mähdrescher.**

(30) Priorität: 18.10.82 US 434820

(43) Veröffentlichungstag der Anmeldung:
25.04.84 Patentblatt 84/17

(45) Bekanntmachung des Hinweises auf die Patenterteilung:
06.08.86 Patentblatt 86/32

(84) Benannte Vertragsstaaten:
BE DE FR GB IT

(56) Entgegenhaltungen:
DE - A - 2 245 603
US - A - 3 805 798
US - A - 4 404 975

(73) Patentinhaber: **DEERE & COMPANY, 1 John Deere
Road, Moline Illinois 61265 (US)**

(72) Erfinder: **Bassett, James Howard, 2420 Scott St.,
Davenport Iowa 52803 (US)**
Erfinder: **Christensen, Timothy Franklin, 3017 9th St., E.
Moline Illinois 61244 (US)**
Erfinder: **Pearson, Mark Leonard, 4813 47th Ave., Moline
Illinois 61265 (US)**

(74) Vertreter: **Sartorius, Peter et al, DEERE & COMPANY
European Office, Patent Department
Postfach 503 Steubenstrasse 36-42,
D-6800 Mannheim 1 (DE)**

## Beschreibung

Die Erfindung bezieht sich auf eine Steinfangvorrichtung für Mähdrescher nach dem Axialflussprinzip mit einem Schrägfördergehäuse, das an ein zylindrisches Gehäuse zur Aufnahme einer Dresch- und Trenntrommel angeschlossen ist, die an der Zuführseite für das Erntegut einen mit Förderorganen versehenen Förderbereich aufweist und deren Aussenumfang mit der Innenseite des Gehäuses zum Passieren des Erntegutes einen Ringspalt bildet, wobei der vor dem mit Dresch- und Trennleisten versehenen Bereich der Dresch- und Trenntrommel angeordneten Steinfangvorrichtung eine verstellbare Verschlussvorrichtung zur Abdeckung einer Öffnung zum Passieren der Fremdkörper zugeordnet ist.

Es ist bereits eine Steinfangvorrichtung bekannt (US-A-3 805 798), die aus einer im Boden des Schrägfördergehäuses des Mähdreschers vorgesehenen verschwenkbaren Klappe besteht, in deren Bereich ein Sensor vorgesehen ist, der die im Erntegut mitgeführten Steine ermittelt und die hieraus gewonnene Störgrösse einem Stellorgan zuführt, das eine Öffnung der Klappe bewirkt, so dass die im Erntegut mitgeführten Steine aus dem Erntegut herausgeführt werden können. Da die Klappe im Boden des Schrägfördergehäuses angeordnet ist, tritt beim Öffnen der Klappe auch Erntegut durch die Öffnung nach aussen, so dass bei Ernten des Mähdreschers auf sehr steinigem Boden und infolge dessen durch sehr häufiges Öffnen der Klappe hohe Erntegutverluste auftreten.

Es ist bereits eine Steinfangvorrichtung für einen Mähdrescher der eingangs aufgeführten Art bekannt (DE-A-2 245 603), die mit einem Schrägfördergehäuse und einem zwischen dem Schrägfördergehäuse und der Dresch- und Trennvorrichtung vorgesehenen Förderorgan ausgerüstet ist. Unterhalb des als Paddelwalze ausgebildeten Förderorgans befindet sich eine Steinfalle, die als Abdeckplatte lösbar mit dem Boden des Schrägförderers verbunden ist. Da die Paddelwalzen bei entsprechender Geschwindigkeit die Steine leicht über die Steinfalle hinwegfördern, besteht die Gefahr, dass die Steine in die nach dem Axialflussprinzip arbeitende Dresch- und Trennvorrichtung gelangen, so dass dort Beschädigungen auftreten können.

Demgegenüber liegt der Erfindung die Aufgabe zugrunde, die Steinfangvorrichtung derart auszubilden, dass auch in einer bereits verdichteten Erntegutmatte enthaltene Fremdkörper ohne weiteres zurückgehalten werden und nicht in die Dresch- und Trennorgane des Mähdreschers gelangen.

Diese Aufgabe ist dadurch gelöst worden, dass vor dem Ringspalt eine einen kleinen Durchlassquerschnitt als der Ringspalt aufweisende Vorrichtung zum Zurückhalten von Fremdkörpern vorgesehen ist, über die die Fremdkörper abgewiesen und auf der Dresch- und Trenntrommel angeordneten Förderorganen zugeführt werden, die die Fremdkörper durch die Öffnung zentrifugalartig bewegen. Durch die Verwendung der genannten Vorrichtung wird sichergestellt, dass keine Steine mehr in die Dresch- und Trennvorrichtung gelangen, da diese Vorrichtung vor den Dresch- und Trennorganen angeordnet ist und verhindert, dass ab einer bestimmten Grösse Steine in das Dresch- und Trenngehäuse gelangen. Dabei kann der Durchlassquerschnitt so ausgestaltet sein, dass ausreichend Erntegut die Vorrichtung passieren kann. Eine derartige Vorrichtung zum Zurückhalten von Fremdkörpern eignet sich insbesondere für Mähdrescher, die nach dem Axialflussprinzip arbeiten, wobei die Dresch- und Trenntrommel mit dem Gehäuse einen Ringspalt bildet, durch den das Erntegut bewegt wird. Hierzu ist es vorteilhaft, dass die Vorrichtung zum Zurückhalten der Fremdkörper vor dem Einlassteil des Gehäuses zur Aufnahme der Dresch- und Trenntrommel vorgesehen ist. Da die Auslassöffnung zum Passieren der Fremdkörper oberhalb der Vorrichtung zum Zurückhalten der Fremdkörper angeordnet ist, können Erntegutverluste weitgehend ausgeschaltet werden, da diese sich normalerweise infolge ihres geringen Massengewichtes näher an der Oberfläche der Dresch- und Trenntrommel befinden als die schwereren Fremdkörper, beispielsweise Steine.

In weiterer Ausgestaltung der Erfindung ist es vorteilhaft, dass der Durchlassquerschnitt der Vorrichtung zum Zurückhalten von Fremdkörpern durch einen ringförmigen Schlitz gebildet ist, der auf einer radial verlaufenden Ebene liegt, die rechtwinklig zur Längsachse der Dresch- und Trenntrommel verläuft, und dass der Schlitz über den gesamten Umfang in Radialrichtung eine gleiche Höhe aufweist. Vorteilhaft ist es ausserdem, dass zumindest ein den Schlitz bildendes Teil der Vorrichtung zur Zurückhaltung von Fremdkörpern radial und konzentrisch einstellbar ausgebildet ist. Da zumindest ein Teil der Vorrichtung zur Zurückhaltung der Fremdkörper verstellbar ausgebildet ist, lässt sich auf einfache Weise der Durchlassquerschnitt verändern, so dass je nach Erntegutart eine einwandfreie Aufnahme des Erntegutes durch die Dresch- und Trenntrommel gewährleistet ist. Dabei ist es vorteilhaft, dass die Vorrichtung zur Zurückhaltung von Fremdkörpern aus einem inneren und einem äusseren Ring bzw. Steinkragen gebildet ist, wobei der äussere Ring über eine Stellvorrichtung verstellbar ist. Durch die Verwendung zweier auf einer Ebene angeordneten Ringe erhält man mit einfachen baulichen Mitteln eine wirkungsvolle Vorrichtung, die sicherstellt, dass keine Fremdkörper mehr in die Dresch- und Trennvorrichtung gelangen. Da die beiden Ringe auf einer Radialebene angeordnet sind, die die Längsachse der Dresch- und Trenntrommel rechtwinklig schneidet, wird verhindert, dass die Ringe mit der Dresch- und Trenntrommel bzw. der Innenseite des Gehäuses Taschen bilden, in der sich Erntegut ansammeln kann.

Je nach Erntguteinsatz ist es vorteilhaft, dass der äussere Ring über die Stellvorrichtung derart weit in Radialrichtung verstellbar ist, dass seine innen liegende Kante mit der Innenoberfläche des Gehäuseteils abschliesst. Durch Herausbewegen des äusseren Ringes aus der Bewegungsbahn des Erntegutes wird, insbesondere bei schwierigen Erntegutverhältnissen, sichergestellt, dass ein störungsfreier Erntegutfluss aufrechterhalten werden kann. Dabei ist eine derartige Verstellung des äusseren Ringes vorteilhaft, wenn Mais geerntet wird, bei dem Fremdkörper grösseren Durchmessers eher toleriert werden können als beim Ernten anderer Erntegutsorten.

Eine vorteilhafte Montage der Ringe erhält man dadurch, dass der innere Ring auf der Dresch- und Trenntrommel und der äussere Ring am Gehäuse befestigt ist, wobei die beiden Ringe im Bereich der Übergangsstelle eines konischen Einzugsteils des zylindrischen Teils der Dresch- und Trenntrommel vorgesehen sind. Da die beiden gegenüberliegenden Ringe einen konischen Einlassspalt bilden, wird ein vorteilhafter Übergang zwischen dem Einzugsteil bzw. den Zuführorganen und dem Aufnahmeteil des Gehäuses, in dem der zylindrische Teil der Dresch- und Trenntrommel angeordnet ist, geschaffen. Hierzu ist es vorteilhaft, dass die auf dem Einzugsteil der Dresch- und Trenntrommel vorgesehenen Förderorgane bzw. Förderleisten sich stromabwärts hinter die Ringe in den zylindrischen Teil des Gehäuseteils der Dresch- und Trenntrommel erstrecken. Vorteilhaft ist es ausserdem, dass der durch die Ringe gebildete Schlitz bzw. Ringspalt in Förderrichtung bzw. stromabwärts gesehen im Querschnitt abnimmt. Hierzu ist es vorteilhaft, dass die beiden Ringe gegenüberliegende Kanten aufweisen, die den Schlitz bzw. Ringspalt bilden, wobei die Kanten auf einer Radialebene liegen, die die Längsachse der Dresch- und Trenntrommel rechtwinklig schneidet.

In weiterer Ausgestaltung der Erfindung ist es vorteilhaft, dass die beiden sich radial erstreckenden, konzentrisch angeordneten Ringe einzeln oder gemeinsam verstellbar gelagert sind, wobei die radiale Ausdehnung des inneren auf der Dresch- und Trenntrommel angeordneten Ringes grösser als die radiale Ausdehnung des am Gehäuse angeordneten Ringes ist, und dass die Ringe eine konisch verlaufende Phase bzw. Ausdrehung aufweisen, die konzentrisch zur Dresch- und Trenntrommel ausgerichtet ist, wobei ein Teil der Phase mit einer eine sich radial erstreckende Oberfläche aufweisenden Aussparung versehen ist. Die in der konisch verlaufenden Phase des äusseren Ringes vorgesehene Aussparung, die sich in den Bereich der Auslassöffnung erstreckt, gestattet eine bessere Abgabe des Fremdkörpers durch die Auslassöffnung, ohne dass auf den Fremdkörper eine unnötige Keil- bzw. Quetschwirkung ausgeübt wird. Um eine Quetschwirkung auf die Fremdkörper zu vermeiden, ist es vorteilhaft, dass die an der Innenseite des Gehäuses vorgesehenen Führungsleisten die gleiche Höhe wie der aussen liegende Ring aufweisen und dass der äussere Ring gegenüber dem inneren Ring in Förderrichtung des Erntegutes axial versetzt ist. Durch die axiale Versetzung der einzelnen Ringe zueinander wird also verhindert, dass sich die Fremdkörper in dem Ringspalt der beiden gegenüberliegenden Ringe festsetzen. Hierzu ist es vorteilhaft, dass die radiale Ausdehnung des Ringspaltes bzw. Schlitzes zwischen den beiden Ringen grösser als die axiale Versetzung ist.

Um einen einwandfreien Austrag der Fremdkörper aus dem Gehäuse zu gewährleisten, ist es vorteilhaft, dass die im Gehäuse vorgesehene Auslassöffnung in Förderrichtung gesehen eine vordere Kante und eine hintere Kante aufweist, wobei letztere auf der gleichen Radialebene wie die Stirnseite des äusseren Ringes liegt, und dass an die Auslassöffnung ein Auffangbehälter zur Aufnahme der Fremdkörper angeschlossen ist, der eine über eine Klappe verschliessbare Auslassöffnung aufweist. Vorteilhaft ist es ferner, dass die Auslassöffnung sich in Umfangsrichtung des Gehäuses erstreckt und der Auffangbehälter tangential an das Gehäuse angeschlossen ist und dass der Auffangbehälter sich von der Auslassöffnung radial nach aussen erstreckt und seine äussere Wand im Bereich der Gehäusewand des Mähdreschers vorgesehen ist. Durch den tangentialen Anschluss des Gehäuses an das Gehäuse der Dresch- und Trenntrommel wird ein einfacher und glatter Übergang zwischen dem Auffangbehälter und dem Gehäuse geschaffen. In weiterer Ausgestaltung der Erfindung ist es vorteilhaft, dass die Auslassöffnung im oberen Bereich des Gehäuses angeordnet ist und dass das Gehäuse im Querschnitt vier Quadranten bzw. Abschnitte aufweist und die Auslassöffnung in Drehrichtung gesehen im oberen bzw. vierten Quadranten vorgesehen ist. Da die Auslassöffnung im oberen Bereich des Erntegutes angeordnet ist, können die Erntegutverluste klein gehalten werden, da vorwiegend im oberen Bereich die über die Zentrifugalkräfte stärker beschleunigten Steine durch die Auslassöffnung ausgeschieden werden. Hierzu ist es vorteilhaft, dass die Auslassöffnung im Gehäuse ein Bogenmass nicht grösser als 90° aufweist.

Bei einer weiteren Ausführungsform der Erfindung ist es vorteilhaft, dass zwischen der Innenseite des Gehäuses und dem Aussenumfang des Gehäusemantels sowie den Förderleisten der Dresch- und Trenntrommel ein Förderweg zur Aufnahme der Steine gebildet ist, über den die Steine mittels der Förderleisten zur Auslassöffnung bewegt werden, wobei die axiale Ausdehnung des Förderweges in etwa doppelt so gross ist wie die radiale Ausdehnung des Ringraumes zwischen Dresch- und Trenntrommel und dem Gehäuse, und dass der oder die Ringe über eine Stellvorrichtung verstellbar sind, die über einen im Bereich der Bewegungsbahn des Erntegutes vorgesehenen Geber zur Erfassung von Störgrössen steuerbar ist. Durch die Verwendung eines besonderen Förderweges zur Aufnahme der Fremdkörper wird sichergestellt, dass diese auf einfache Weise der Auslassöffnung zugeführt werden, wobei die auf der Dresch- und Trenntrommel vorgesehenen Förderleisten den Transport der Fremdkörper zur Auslassöffnung unterstützen. Durch die Verwendung der Stellvorrichtung, die über den Geber steuerbar ist, lässt sich in Abhängigkeit von dem Anfall der Fremdkörper im Erntegut der Querschnitt zwischen den beiden Ringen automatisch so regeln, dass der Querschnitt stets dann verengt wird, wenn zahlreiche bzw. kleinere Steine im Erntegut enthalten sind. Ebenso lässt sich durch den Sensor auch bei Gutsstau automatisch eine Querschnittserweiterung des Ringspaltes vornehmen, so dass Verstopfungen im Übergangsbereich zwischen den Zuführorganen und den Einzugsorganen der Dresch- und Trenntrommel vermieden werden können.

Im folgenden wird die Erfindung anhand von mehrere Ausführungswege darstellenden Zeichnungen näher erläutert. Es zeigt:

Fig. 1 den Einzugsbereich einer Dresch- und Trenntrommel eines Mähdreschers nach dem Axialflussprinzip teilweise im Schnitt;

Fig. 2 eine Schnittdarstellung entlang der Linie 2–2 gemäss Fig. 1;

Fig. 3 eine Teilansicht des oberen Teils der Dresch- und Trennvorrichtung gemäss Fig. 1;

Fig. 4 eine Frontansicht der Dresch- und Trennvorrichtung mit Stellorganen zur Verstellung von Ringen einer Steinfangvorrichtung;

Fig. 5 ein weiteres Ausführungsbeispiel des Einzugsteiles der Dresch- und Trenntrommel, insbesondere des Ringes zur Zurückhaltung von Fremdkörpern;

Fig. 6 eine ähnliche Darstellung wie in Fig. 3, jedoch mit axial verschobenen Ringen;

Fig. 7 die automatische Steuervorrichtung zur Verstellung der Ringe der Steinfangvorrichtung;

Fig. 8 eine schematische Darstellung eines weiteren Ausführungsbeispiels für einen Ring zur Zurückhaltung von Fremdkörpern.

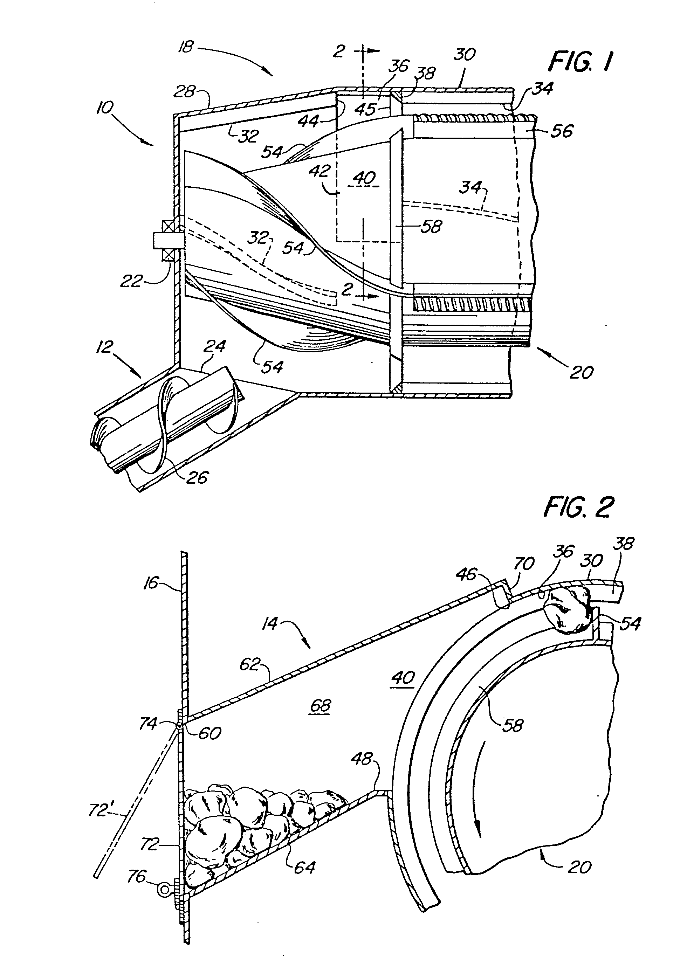

In der Zeichnung ist in den Fig. 1 und 2 der Einzugsbereich einer Dresch- und Trennvorrichtung 10 eines in der Zeichnung nicht dargestellten Mähdreschers bezeichnet, der nach dem Axialflussprinzip arbeitet. An den vorderen Teil der Dresch- und Trennvorrichtung 10 ist ein Schrägfördergehäuse 12 angeschlossen sowie eine Steinfangvorrichtung 14 vorgesehen, die sich zwischen der Dresch- und Trennvorrichtung 10 sowie einer Gehäusewand 16 des Mähdreschers erstreckt. Die Dresch- und Trennvorrichtung 10 wird von einem zylinderförmigen Gehäuse 18 umgeben, in dem eine Dresch- und Trenntrommel 20 drehbar gelagert ist. In Fig. 1 ist lediglich das vordere Lager 82 zur Aufnahme der Dresch- und Trenntrommel in einer Stirnwand des Gehäuses 18 dargestellt. An das Schrägfördergehäuse ist eine in der Zeichnung nicht dargestellte Erntebergungsvorrichtung angeschlossen, die Erntegut aufnimmt und es über das Schrägfördergehäuse 12 durch eine Einlassöffnung bewegt. Hierzu sind in dem Schrägfördergehäuse 12 paarweise zusammenwirkende Förderschnecken 26 angeordnet.

Das Gehäuse 18 besteht aus einem vorderen konisch ausgebildeten Aufnahmeteil 28, an den sich ein zylindrisch ausgebildeter Gehäuseteil 30 anschliesst. An der Innenseite des Aufnahmeteils 28 sowie des Gehäuseteils 30 sind Führungsleisten 32 angeordnet, die einen spiralförmigen Verlauf aufweisen können. Durch Fortlassen eines Teiles der Führungsleisten 32 im vorderen Bereich des Gehäuseteils 30 wird in Umfangrichtung gesehen ein Weg 36 für die Fremdkörper bzw. Steine gebildet. Am Auslaufende des Weges 36 und am stromaufwärts liegenden Ende der Führungsleisten 34 ist ein Ring bzw. Steinkragen 38 vorgesehen, der konzentrisch im Gehäuseteil 30 angeordnet ist.

Der Weg 36, auf dem sich die Fremdkörper bzw. Steine weiterbewegen, endet an einer Auslassöffnung 40, die im linken oberen Viertel des Gehäuseumfangs des Gehäuseteils 30 vorgesehen ist und die durch eine stromaufwärts liegende Kante 42 begrenzt wird, die in etwa auf der gleichen Höhe wie das stromabwärts liegende Ende 44 der Führungsleiste 32 liegt. Die Auslassöffnung 40 wird ferner durch eine stromabwärts liegende Kante gebildet, die auf der Ebene der Stirnseite 45 des Ringes bzw. Steinkragens 38 liegt. Ferner besteht die Auslassöffnung 40 in Umfangsrichtung gesehen aus einer oberen Kante 46 sowie einer unteren Kante 48.

Die Dresch- und Trenntrommel 20 besteht aus einem Aufnahmeteil sowie dem Dresch- und Trennteil. Die Dresch- und Trenntrommel 20 besteht aus dem vorderen kegelstumpfförmigen Einzugsteil 50, an das sich das zylinderförmige Dresch- und Trennteil 52 anschliesst. Das Einzugsteil 50 weist am Umfang verteilte schneckenförmig verlaufende Förderleisten 54 auf, während auf dem Dresch- und Trennteil 52 zahlreiche nebeneinander angeordnete und in etwa parallel zueinander verlaufende Dresch- und Trennleisten 56 vorgesehen sind. An der Verbindungsstelle zwischen dem Einzugsteil 50 und dem Dresch- und Trennteil 52 weist die Dresch- und Trenntrommel 20 einen ringförmigen Kragen bzw. Steinkragen 58 auf.

Die Steinfangvorrichtung 14 ist ein Gehäusekanal, der sich nach aussen und unten von der Auslassöffnung 40 am Ende des Weges 36 zu einer Öffnung 60 in der Wand 16 des Mähdreschergehäuses erstreckt. Der Gehäusekanal der Steinfangvorrichtung 14 kann im Querschnitt rechteckförmig ausgebildet sein und aus einer oberen Wand 62, einem Boden 64 sowie gegenüberliegenden Seitenwänden 66 und 68 gebildet sein. Die obere Wand 62 verläuft in etwa tangential zum Aussenumfang des Gehäuseteils 30, wobei sie ein wenig radial nach aussen versetzt ist und somit eine Stufe 70 bildet, die durch die untere Kante 46 begrenzt wird. Die Öffnung 60 in der Wand 16 ist über eine Klappe 72 verschlossen, die an ihrem oberen Ende 74 an die Wand 16 angeschlossen ist und über ein Verriegelungselement 76 sicherbar ist.

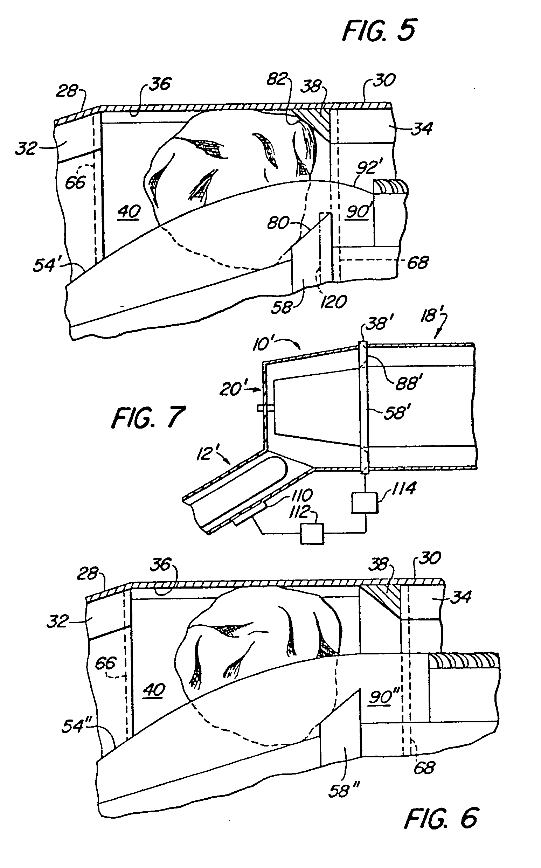

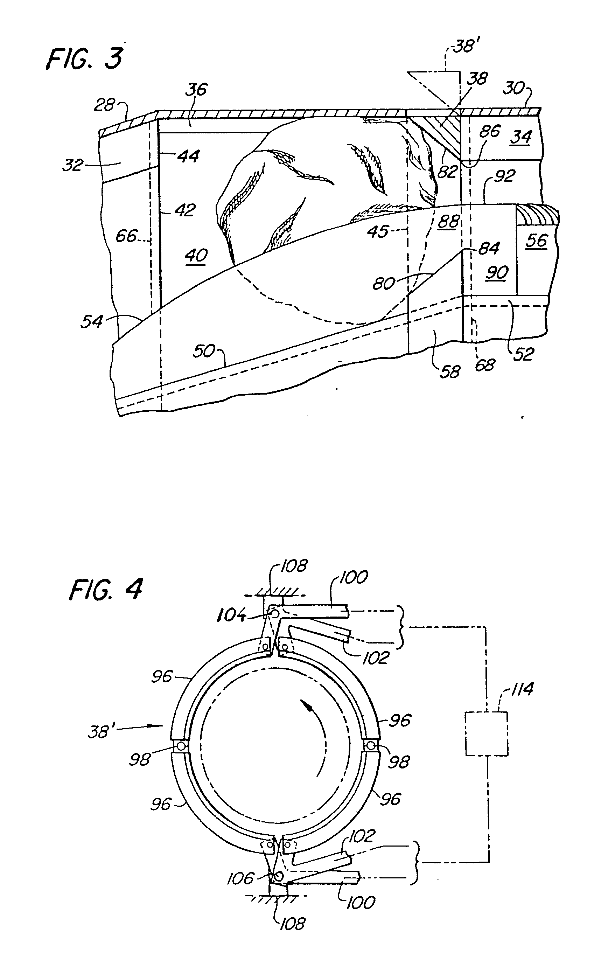

In Fig. 3 sind die Steinfangvorrichtung bzw. die hierzu notwendigen Führungselemente weiter im Detail veranschaulicht. Zu den Führungselementen gehört der innere Steinkragen 58 sowie der äussere Steinkragen 38. Die Steinkragen 38 und 58 sind mit einer konischen Eindrehung bzw. Phase 80 bzw. 82 versehen. Das Auslaufende der Phase 80 bzw. 82 wird durch die Kante 84 bzw.

Kante 86 begrenzt. Die konzentrisch zueinander ausgerichteten Kanten 84 und 86 bilden einen ringförmigen Schlitz 88. Der Schlitz 88 ist in Umfangsrichtung gesehen gleichförmig ausgebildet, mit Ausnahme für den Bereich, durch den sich das stromabwärts liegende Ende 90 der Förderleiste 54 erstreckt. Wie aus Fig. 3 hervorgeht, steht 50 % der Förderleiste 54 über der oberen Kante 84 des Steinkragens 80. D. h. der Abstand zwischen der oberen Kante 92 der Förderleiste 54 und der oberen Kante 84 des Steinkragens 80 entspricht in etwa der Höhe der Förderleiste 54.

Eine Verstellvorrichtung zur Verstellung des Ringes bzw. äusseren Kragens 38' ist in Fig. 4 veranschaulicht. Der Steinkragen 38 ist in vier gleichmässige Abschnitte 96 aufgeteilt, wobei jeweils zwei auf der rechten bzw. auf der linken Seite der Dresch- und Trenntrommel 20 liegende Abschnitte 96 über Gelenke 98 beweglich miteinander verbunden sind. An den oberen bzw. unteren gegenüberliegenden Enden der Abschnitte 96 sind Gestänge 100 und 102 angeschlossen. Die Gestänge 100 bzw. 102 sind über Gelenkbolzen 104 bzw. 106 am Mähdrescherrahmen 108 schwenkbar angeschlossen. Die Gestänge 100 und 102 werden über eine in der Zeichnung nur schematisch angedeutete Stellvorrichtung 114 gemeinsam verstellt, so dass bei einer Verstellung der Abschnitte 96 diese stets einen annähernd gleichen Abstand zum Aussenumfang der Dresch- und Trenntrommel 20 aufweisen.

Die Verstellung des Steinkragens 38' wird, wie bereits angedeutet, über die Stellvorrichtung 114 bewirkt, wobei die Stellvorrichtung von Hand oder über eine Steuervorrichtung automatisch gesteuert werden kann, und zwar in Abhängigkeit von den auftretenden Fremdkörpern bzw. Steinen, die über einen Sensor 110 erfasst werden. Eine entsprechende Steuer- bzw. Regelvorrichtung ist in Fig. 7 in einem schematischen Blockschaltbild veranschaulicht. Der Sensor 110 kann als elektrischer Geber zur Erfassung der Fremdkörper ausgebildet sein und über eine elektrische Leitung mit der Stellvorrichtung 114 verbunden sein, die eine entsprechende Verstellung der Gestänge 100 und 102 herbeiführt, die mit dem Steinkragen 38' verbunden sind. Durch Veränderung des Schlitzes 88 kann also bestimmt werden, welche Fremdkörper zurückgehalten werden und welche in die Dresch- und Trennvorrichtung gelangen sollen. Durch diese Anordnung kann also die Dresch- und Trennvorrichtung 20 weitgehend vor Beschädigung geschützt werden. Die Steuer- bzw. Regelvorrichtung ist so ausgelegt, dass bei auftretenden Hindernissen die Stellvorrichtung 114 eine Verkleinerung des Schlitzes 88 herbeiführt, sobald der Sensor 110 im Schrägfördergehäuse 12' entsprechende Hindernisse erfasst hat. Die Schlitzverengung wird durch ein Zeitglied geregelt, das gewährleistet, dass auftretende Hindernisse in die Steinfangvorrichtung 14 gelangen und nicht durch den Schlitz 88. Dabei ist es besonders vorteilhaft, dass die automatische Regelvorrichtung eine Verstellung des Steinkragens 38' zwischen einer ersten und zweiten Stellung bewirkt, wobei in der ersten Stellung der Querschnitt des Schlitzes 88 grösser ist als in einer zweiten Stellung des Steinkragens 38. Hierdurch wird sichergestellt, dass Hindernisse bzw. Steine von einer bestimmten Grösse, wie nachfolgend beschrieben, nicht in die Dresch- und Trennvorrichtung 10 gelangen.

Bewegt sich der Mähdrescher im Arbeitseinsatz über das Feld und nimmt Erntegut auf, so wird dieses über das Schrägfördergehäuse 12 dem Einzugteil 50 der Dresch- und Trennvorrichtung 10 zugeführt. Die Dresch- und Trenntrommel 20 mit ihren Förderleisten 54 wirkt mit den Führungsleisten 32 und 34 des Gehäuses 18 zusammen, so dass das Erntegut in einem spiralförmigen Weg durch den Ringraum zwischen der Dresch- und Trenntrommel und dem Inneren des Gehäuses bewegt wird. Das Erntegut kann zahlreiche Steine unterschiedlicher Grösse aufweisen. Durch die radiale Breite des Schlitzes 88 wird gewährleistet, dass das Erntegut in die Dresch- und Trennvorrichtung 10 gelangen kann, wobei die dort enthaltenen Steine so klein sind, dass keine grösseren bzw. wichtigen Beschädigungen an der Dresch- und Trennvorrichtung 10 auftreten. Die axiale stromabwärts verlaufende Bewegung grösserer Steine mittels der Förderleisten 54 wird durch die gegenüberliegenden Steinkragen 38 und 58 jedoch unterbunden. Steine, die zu gross sind, um durch den Schlitz 88 zu wandern, werden über die Förderleisten 54 erfasst und auf dem Weg 36 zur Auslassöffnung 40 bewegt. Durch die Zentrifugalkraft werden die über den Weg 36 transportierten Steine über die Kante 46 der Steinfangvorrichtung 14 hinaus durch die Auslassöffnung 40 bewegt. Die Steine werden dann tangential und in Umfangsrichtung gesehen herausgedrückt bzw. herausgeschleudert und von der Steinfangvorrichtung 14 aufgenommen. Der Versatz in der oberen Wand 62 der Steinfangvorrichtung 14 sowie die Stufe 70 erleichtern die Abgabe der Steine aus dem Dresch- und Trenngehäuse und somit die Aufnahme in der Steinfangvorrichtung 14. Die Kapazität der Steinfangvorrichtung 14 gestattet die Aufnahme zahlreicher Steine, so dass eine häufige Leerung der Steinfangvorrichtung nicht notwendig ist. Die relativ einfache Verriegelung der Klappe 72 in der äusseren Wand 16 des Mähdreschers erleichtert der Bedienungsperson die Herausnahme der Steine, wenn die Steinfangvorrichtung 14 gefüllt ist.

Die durch die Dresch- und Trenntrommel hervorgerufenen Zentrifugalkräfte, die auf die Steine übertragen werden, bewirken in erster Linie den Ausstoss der Steine aus dem Gehäuse der Dresch- und Trennvorrichtung 10. Jedoch ist lediglich der Einbau einer einfachen Auslassöffnung alleine nicht zufriedenstellend. Die Axialkräfte sind dominierend, so dass eine relativ grosse Auslassöffnung notwendig ist, um sicherzustellen, dass die Steine im gewünschten Masse über die Auslassöffnung 40 ausgeschieden werden. Um eine wirkungsvolle Regelung bzw. Kontrolle des Auswurfes der Steine zu erhalten, wird die Axialbewegung der Steine durch die Kragen 38 und 58, die den Schlitz 88 bilden, begrenzt. Dieser durch den Schlitz 88 gebildete Durchlass bestimmt nicht nur die maximale Grösse der Steine, die in die Dresch- und Trennvorrichtung 10 gelangen können, sondern dient auch als Führungs- bzw. Kontrolloberfläche mit Bezug auf die Zentrifugalbewegung der Steine, die in den Bereich der Steinkragen 38 und 58 gelangen, aus dem sie dann tangential über die Auslassöffnung 40 ausgeschieden werden.

Im Ausführungsbeispiel ist der Steinkragen 38 und 58 im Bereich des stromaufwärts liegenden Endes der Dresch- und Trennvorrichtung 10 vorgesehen. Durch das gebildete Hindernis zur Zurückhaltung der Steine wird auch in einer gewissen Weise die Dicke der Erntegutmatte bestimmt. Eine derartige Reduzierung der Matte des Erntegutes ist auf jeden Fall notwendig, wenn diese in die Dresch- und Trennvorrichtung 10 gelangen soll. Somit ist es besonders vorteilhaft, die Vorrichtung zur Zurückhaltung der Steine an dieser Stelle vorzusehen, da an dieser Stelle der Erntegutfluss umgelenkt und umgeformt wird, um von der Dresch- und Trennvorrichtung 10 aufgenommen werden zu können. Es ist auch besonders vorteilhaft, die Vorrichtung zur Zurückhaltung der Steine stromaufwärts vom Aufnahmeteil der Dresch- und Trennvorrichtung vorzusehen, und zwar in dem Bereich, in dem der Gehäuseteil 30 bereits zylinderförmig ausgebildet ist. Obwohl es besonders vorteilhaft ist, in einem zylindrischen Gehäuse eine Vorrichtung zur Zurückhaltung der Steine konzentrisch anzuordnen, ist auch eine Abweichung von der beschriebenen Anordnung der konzentrisch angeordneten Steinkragen sowie des zylindrischen Endes der Dresch- und Trennvorrichtung 10 möglich. Es ist lediglich notwendig, dass die Vorrichtung zur Zurückhaltung der Steine bzw. das sogenannte Steingitter so dimensioniert ist, dass Steine von einer bestimmten Grösse an zurückgehalten werden können. Beispielsweise ist es möglich, die Steinkragen nicht unbedingt konzentrisch zueinander auszurichten bzw. konzentrisch im zylinderförmigen Gehäuseteil 30 vorzusehen. Ebenso kann der kreisförmige Durchlassquerschnitt bzw. kreisförmige Schlitz 88 verändert werden, solange sichergestellt ist, dass ein Weg für die Steine zur Auslassöffnung 40 vorhanden ist, ohne dass die Steine hierbei grössere Widerstände zu überwinden haben.

Werden die Steine durch den Ring bzw. Steinkragen 38 und 58 zurückgehalten und ist sichergestellt, dass die Steine eine ausreichende Umfangsgeschwindigkeit haben, um durch die Auslassöffnung 40 herausbewegt zu werden, so braucht die Gehäuseauslassöffnung nur etwas grösser zu sein als die maximale Grösse der Steine, die in den Einzugsbereich an dieser Stelle gelangen. Jedoch ist es besonders vorteilhaft, die Steuervorrichtung, die die Grösse der Auslassöffnung und der Verhältnisse regelt, so zu bemessen, dass eine ausreichende Anzahl Steine schon nach wenigen Umdrehungen innerhalb des Gehäuses ausgeschieden wird, ohne dass Steinbruch bzw. Beschädigungen an den einzelnen Arbeitsorganen auftreten. Die Reduzierung der Auslassöffnung auf ein Minimum verursacht eine Vergrösserung des Kraftaufwandes zur Bewegung des Erntegutes durch die Auslassöffnung. Die Unterbringung der Auslassöffnung in einem Bereich des Gehäuses, in dem eine sehr geringe Konzentration des Erntegutes auftritt, ist besonders vorteilhaft und erleichtert den Ausstoss der Steine in die Steinfangvorrichtung 14. In den Fig. 1 und 2 ist die Auslassöffnung 40 in einem Bereich untergebracht, der die beschriebenen Kriterien berücksichtigt. Die Auslassöffnung 40 weist eine relativ geringe axiale Ausdehnung auf (in etwa 150 mm) und erstreckt sich über ein Bogenmass von 70°, wobei die Öffnung im oberen linken Viertel des Gehäuseteils 30 vorgesehen ist, so dass der Erntegutfluss sie ohne weiteres passieren kann, da dieser nach unten gerichtet ist. Dies erleichtert die Verwendung einer einfach gestalteten Steinfangvorrichtung 14, die direkt mit der äusseren Wand 16 des Mähdreschers in Verbindung steht. Vorzugsweise kann das Bogenmass der Auslassöffnung 40 zwischen 60° und 90° liegen.

Die nachfolgenden zusätzlichen Details sind Beispiele für Abmessungen und Verhältnisse der einzelnen Bauteile, um eine einwandfreie Förderung des Erntegutes und den entsprechenden Ausstoss der Steine zu gewährleisten. In einer Dresch- und Trennvorrichtung mit einem Durchmesser der Dresch- und Trenntrommel zwischen 400 und 700 mm und Führungsleisten 32 und 34 von einer radialen Höhe von ca. 25 mm bei einem Zwischenraum von 25 mm zwischen den Führungsleisten und den Förderleisten 54 kann ein Schlitz 88 bzw. ein Gitter vorgesehen werden, das einen Durchlassquerschnitt von ca. 50 mm aufweist. Es hat sich als vorteilhaft herausgestellt, einen ringförmigen Schlitz 88 zu bilden, der mit Bezug auf die Innenwand der Dresch- und Trennvorrichtung 10 nach innen versetzt ist. Hierzu dient ein äusserer Kragen 38, der von dem Gehäuse der Dresch- und Trennvorrichtung 10 getragen wird und der eine Höhe von 25 mm aufweist. Ein innerer Steinkragen 58, der auf der Dresch- und Trenntrommel 20 angeordnet ist, weist eine radiale Ausdehnung von 50 mm auf. Die äussere Kante der Förderleiste 54 halbiert in etwa den ringförmigen Schlitz 88. Der Weg 36 zur Führung der Steine befindet sich dann unmittelbar stromaufwärts vom Steinkragen und weist eine Breite von 150 mm auf, so dass er mit der Breite der Auslassöffnung 40 übereinstimmt.

Der ringförmige Schlitz 88 des Steinkragens kann als drittes Tor bzw. Gitter betrachtet werden bei einer dreistufigen Steuerung der einzelnen Steine innerhalb des Mähdreschers. Das erste Tor bzw. Gitter ist die Erntegutaufnahmevorrichtung, die ohne weiteres relativ grosse Steine aufnimmt, die einen Durchmesser aufweisen können, der grösser als 150 mm ist. Das zweite Hindernis bzw. zweite Gitter kann ein Teil des Schrägfördergehäuses sein, das in der Zeichnung nicht dargestellt ist und das so ausgebildet ist, dass Steine mit einer Grösse von mehr als 150 mm Durchmesser es nicht passieren können. Die Steuerung der Steine innerhalb des Schrägfördergehäuses kann über eine Rutschkupplung innerhalb des Antriebssystems der Förderorgane des Schrägfördergehäuses vorgenommen werden. Daraus folgt, dass die Erntegutbearbeitungsorgane bzw. Förderorgane zwischen dem zweiten Tor (Schrägfördergehäuse) und dem dritten Tor bzw. Gitter (Steinkragen) so ausgelegt werden müssen, dass die Steine ohne weiteres über den Weg 36 in die Steinfangvorrichtung 14 gelangen können. Steine, die einen geringeren Durchmesser als 50 mm aufweisen, können durch den ringförmigen Schlitz 88 der beiden Steinkragen gelangen und weiterbewegt werden, ohne dass eine ernsthafte Beschädigung der stromabwärts liegenden Teile der Dresch- und Trennvorrichtung 10 zu befürchten ist.

Die Plazierung des dritten Gitters zur Kontrolle der Steine unmittelbar vor dem Bereich, in dem eine stärkere Verdichtung des Erntegutes bzw. der Erntegutmatte auftritt, ist besonders vorteilhaft, um eine einwandfreie Förderung bei grossem Wirkungsgrad zu erzielen und sicherzustellen, dass die Steine ohne grösseren Kraftaufwand aus dem Erntegut ausgeschieden werden können.

Es ist besonders wichtig und vorteilhaft, im Bereich der Steinkragen der Dresch- und Trennvorrichtung die einzelnen Teile derart auszubilden, dass die Steine keiner übergrossen Reibwirkung bzw. Quetschwirkung unterliegen. Die Quetschwirkung kann im Bereich des ringförmigen Schlitzes 88, der durch die inneren und äusseren Kragen 38 und 58 gebildet ist, auftreten, wenn beispielsweise der Einzugsteil 50 konisch ausgebildet ist. Dieser geringfügige Nachteil ist jedoch durch den Vorteil wieder ausgeglichen, der darin besteht, dass das Erntegut auf einfache Weise mit einem Minimum an Kraftaufwand in die Dresch- und Trennvorrichtung gelangt. Wie aus Fig. 5 hervorgeht, ist die Neigung der Phase 82 des Steinkragens 38 relativ gering. Dabei ist es vorteilhaft, dass ein flacher Teil 120 am inneren Steinkragen 58 vorgesehen ist (siehe gestrichelte Linien). Hierdurch kann die Tendenz der Quetschung der Steine reduziert werden. Eine Reduzierung der Quetschwirkung der Steine kann auch dadurch sichergestellt werden, dass der innere Steinkragen 58″ gegenüber dem äusseren Kragen 38 (siehe Fig. 6) axial versetzt ist. Die axiale Versetzung der beiden Steinkragen 38 und 58 weist weiterhin den Vorteil auf, dass die Steinführung im Weg 36 zur Steinfangvorrichtung 14 verbessert wird.

Eine weitere Quetschung bzw. Keilwirkung, die auf die Steine ausgeübt werden kann, tritt an der Übergangsstelle zwischen den Förderleisten 54 und dem inneren Steinkragen 58 auf. Eine Quetschwirkung der Steine kann durch entsprechende Neigung der Phase des Kragens 58″ vermieden werden. Ebenfalls kann durch Herabsetzung des Steigungswinkels der Förderleisten im Bereich der Steinkragen eine Quetschwirkung der Steine vermieden werden.

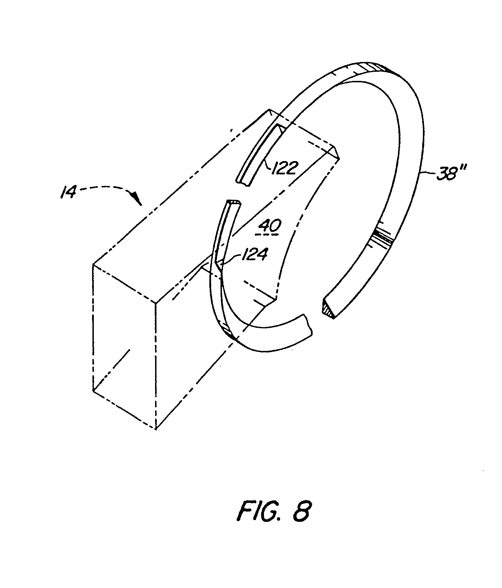

Eine weitere Herabsetzung der Quetschung der Steine kann auch durch die vorteilhafte Ausgestaltung des Steinkragens 38″ gemäss Fig. 8 vermieden werden. Der Teil 122 des Steinkragens 38″, der die Steinfangvorrichtung 14 überspannt, ist besonders ausgestaltet, und zwar weist dieser Bereich, ähnlich wie in Fig. 5 (Teil 120), eine Ausdrehung auf, so dass der Teil 122 mit Bezug auf die Radialebene eine flache Oberfläche aufweist, die beiderseits durch das Übergangsteil 124 begrenzt ist. Hierdurch wird der Ausstoss der Steine in die Steinfangvorrichtung 14 erleichtert, da ein relativ glatter Übergang zwischen dem Steinkragen 38″ und der Steinfangvorrichtung 14 geschaffen wird. Die Verwendung der Steinkragen 38 und 58 und die hierdurch auftretende Querschnittsverengung des Schlitzes 88 bewirkt grundsätzlich eine Leistungserhöhung zur Förderung des Erntegutes durch das Dresch- und Trenngehäuse. Der Leistungsanstieg kann jedoch durch die vorteilhafte Ausgestaltung der Steinkragen, insbesondere an den Übergangsstellen, klein gehalten werden. Ebenfalls kann durch optimale Steuerung der Steinkragen bzw. deren Durchlassquerschnittes der Leistungsbedarf klein gehalten werden. Um den Leistungsanstieg nicht unnötig zu erhöhen, soll der radiale Zwischenraum zwischen den Förderleisten 54 und dem äusseren Steinkragen 38 so gross wie möglich gehalten werden, wobei durch entsprechende Indexierung der Förderleisten die Steine ausreichend schnell durch den Weg 36 in die Steinfangvorrichtung 14 bewegt werden. Dabei ist es besonders vorteilhaft, die Höhe der Förderleiste 54′ gemäss Fig. 5 hinter dem Steinkragen 58 etwas zu reduzieren. Hierdurch kann ein ausreichender Förderraum aufrechterhalten werden, während gleichzeitig im Übergangsbereich die Quetschwirkung zwischen der Kante 92 und dem äusseren Steinkragen (Fig. 3) reduziert werden kann.

Die Förderleisten 54, 54′ gemäss Fig. 3 und 5 erstrecken sich stromabwärts hinter den Steinkragen 38 bzw. 58. Die Verlängerung 90 bzw. 90′ bzw. die axiale Überlappung gestattet eine einwandfreie Förderung des Erntegutes durch den Schlitz 88 der Steinkragen 38 und 80, so dass ein gleichmässiger Erntegutfluss im Bereich der Kragen gewährleistet wird, wobei der Kraftbedarf in diesem Bereich zur Förderung des Erntegutes klein gehalten werden kann. Das stromabwärts liegende Ende der Verlängerung 90 bzw. 90′ setzt sich fort in das stromaufwärts liegende Ende der Dresch- und Trennleiste 56 der Dresch- und Trenntrommel 20. Durch die Vergrösserung der Spaltbreite des Ringspaltes 88 ist es möglich, den Kraftbedarf zur Förderung des Erntegutes weiter herabzusetzen. Im Ausführungsbeispiel ist der Steinkragen 38′ einstellbar angeordnet (Fig. 3). Er kann so weit verstellt werden bzw. zurückgezogen werden, dass die innere Kante 86 auf der gleichen Ebene liegt wie die innere Oberfläche des Gehäuseteils 30. Der Stellweg des Steinkragens 38′ in Radialrichtung beträgt ca. 25 mm, so dass der ringförmige Schlitz eine Höhe von ca. 75 mm aufweist, die ausreicht, um beispielsweise Mais durch den Schlitz zu fördern. Die Gefahr, Steine aufzusammeln, ist bei Erntebergungsvorrichtungen für Mais relativ klein verglichen mit Erntebergungsvorrichtungen für andere Erntegutsorten, so dass bei einer Durchlassgrösse von 75 mm etwa aufgenommene Steine in der Dresch- und Reinigungsvorrichtung toleriert werden können. Der Durchlass zwischen den Steinkragen 38' und 58 muss stets so gross sein, dass eine einwandfreie Förderung des Erntegutes, insbesondere des Mais, gewährleistet ist.

Der Leistungsbedarf, der infolge der Verwendung der Steinkragen 38' bzw. 58 etwas erhöht wird, kann dadurch reduziert werden, dass der Durchlassquerschnitt zwischen den Steinkragen nicht kleiner gewählt wird als unbedingt notwendig. Wird beispielsweise der Steinkragen 38' von Hand verstellt, so soll mittels dieser Stellvorrichtung der Steinkragen 38 so weit verstellt werden, wie es die Beschaffenheit des Erntegutes erfordert, und so lange in dieser Stellung bleiben, bis sich die Arbeitsbedingungen entsprechend ändern. Eine automatische Stellvorrichtung des Steinkragens 38' ist in Fig. 7 veranschaulicht. Wie bereits ausgeführt, bleibt auch bei einer automatischen Steuer- bzw. Regelvorrichtung zur Verstellung des Steinkragens 38' der Steinkragen in der Stellung, in der der grösste Durchlassquerschnitt gegeben ist, und zwar so lange, bis über den Sensor 110 mitgeführte Fremdkörper, beispielsweise Steine, abgetastet werden, so dass über diese Störgrösse, die an die Stellvorrichtung 114 weitergeleitet wird, der Steinkragen entsprechend nach innen verstellt wird. Der Steinkragen 38' kann also zwischen einer Stellung für eine grosse Schlitzbreite und einer Stellung für eine kleine Schlitzbreite in Abhängigkeit von den auftretenden Hindernissen verstellt werden und bietet somit einen ausreichenden Schutz für die Dresch- und Trennvorrichtung. Die beschriebene Vorrichtung zur Zurückhaltung von Steinen weist gegenüber den bekannten Steinvorrichtungen zahlreiche Vorteile auf, insbesondere deshalb, weil durch diese Vorrichtungen sichergestellt wird, dass Steine bei entsprechender Verstellung der Steinkragen nicht in die Dresch- und Trennvorrichtung 10 gelangen können.

**Patentansprüche**

1. Steinfangvorrichtung für Mähdrescher nach dem Axialflussprinzip mit einem Schrägfördergehäuse (12), das an ein zylindrisches Gehäuse (18) zur Aufnahme einer Dresch- und Trenntrommel (20) angeschlossen ist, die an der Zuführseite für das Erntegut einen mit Förderorganen (54) versehenen Förderbereich aufweist und deren Aussenumfang mit der Innenseite des Gehäuses (18) zum Passieren des Erntegutes einen Ringspalt bildet, wobei der vor dem mit Dresch- und Trennleisten (56) versehenen Bereich der Dresch- und Trenntrommel (20) angeordneten Steinfangvorrichtung (14) eine verstellbare Verschlussvorrichtung (Klappe 72) zur Abdeckung einer Öffnung (60) zum Passieren der Fremdkörper zugeordnet ist, dadurch gekennzeichnet, dass vor dem Ringspalt eine einen kleineren Durchlassquerschnitt als der Ringspalt aufweisende Vorrichtung (38, 58) zum Zurückhalten von Fremdkörpern vorgesehen ist, über die die Fremdkörper abgewiesen und auf der Dresch- und Trenntrommel (20) angeordneten Förderorganen (54) zugeführt werden, die die Fremdkörper durch die Öffnung (60) zentrifugalartig bewegen.

2. Steinfangvorrichtung nach Anspruch 1, dadurch gekennzeichnet, dass der Durchlassquerschnitt der Vorrichtung zum Zurückhalten von Fremdkörpern durch einen ringförmigen Schlitz (88) gebildet ist, der auf einer radial verlaufenden Ebene liegt, die rechtwinklig zur Längsachse der Dresch- und Trenntrommel (20) verläuft.

3. Steinfangvorrichtung nach Anspruch 1 oder 2, dadurch gekennzeichnet, dass der Schlitz (88) über den gesamten Umfang in Radialrichtung eine gleiche Höhe aufweist.

4. Steinfangvorrichtung nach einem oder mehreren der vorherigen Ansprüche, dadurch gekennzeichnet, dass zumindest ein den Schlitz (88) bildendes Teil der Vorrichtung zur Zurückhaltung von Fremdkörpern radial und konzentrisch einstellbar ausgebildet ist.

5. Steinfangvorrichtung nach einem oder mehreren der vorherigen Ansprüche, dadurch gekennzeichnet, dass die Vorrichtung zur Zurückhaltung von Fremdkörpern aus einem inneren und einem äusseren Ring bzw. Steinkragen (38, 58) gebildet ist, wobei der äussere Ring (38) über eine Stellvorrichtung (114) verstellbar ist.

6. Steinfangvorrichtung nach einem oder mehreren der vorherigen Ansprüche, dadurch gekennzeichnet, dass der äussere Ring (38) über die Stellvorrichtung (114) derart weit in Radialrichtung verstellbar ist, dass seine innen liegende Kante (86) mit der Innenoberfläche des Gehäuseteils (30) abschliesst.

7. Steinfangvorrichtung nach einem oder mehreren der vorherigen Ansprüche, dadurch gekennzeichnet, dass der innere Ring (58) auf der Dresch- und Trenntrommel (20) und der äussere Ring (38) am Gehäuse (18) befestigt ist, wobei die beiden Ringe (38, 58) im Bereich der Übergangsstelle eines konischen Einzugsteils (50) des zylindrischen Teils der Dresch- und Trenntrommel vorgesehen sind.

8. Steinfangvorrichtung nach einem oder mehreren der vorherigen Ansprüche, dadurch gekennzeichnet, dass die auf dem Einzugsteil (50) der Dresch- und Trenntrommel (20) vorgesehenen Förderorgane bzw. Förderleisten (54) sich stromabwärts hinter die Ringe (38, 58) in den zylindrischen Teil des Gehäuseteils (30) der Dresch- und Trenntrommel (20) erstrecken.

9. Steinfangvorrichtung nach einem oder mehreren der vorherigen Ansprüche, dadurch gekennzeichnet, dass der durch die Ringe (38, 58) gebildete Schlitz (88) in Förderrichtung bzw. stromabwärts gesehen im Querschnitt abnimmt.

10. Steinfangvorrichtung nach einem oder mehreren der vorherigen Ansprüche, dadurch gekennzeichnet, dass die beiden Ringe (38, 58) gegenüberliegende Kanten (84, 86) aufweisen, die den Schlitz (88) bilden, wobei die Kanten auf einer Radialebene liegen, die die Längsachse der Dresch- und Trenntrommel (20) rechtwinklig schneidet.

11. Steinfangvorrichtung nach einem oder mehreren der vorherigen Ansprüche, dadurch gekennzeichnet, dass die beiden sich radial erstreckenden, konzentrisch angeordneten Ringe (38, 58) einzeln oder gemeinsam verstellbar gelagert sind, wobei die radiale Ausdehnung des inneren auf der Dresch- und Trenntrommel (20) angeordneten Ringes (58) grösser als die radiale Ausdehnung des am Gehäuse (18) angeordneten Ringes (38) ist.

12. Steinfangvorrichtung nach einem oder mehreren der vorherigen Ansprüche, dadurch gekennzeichnet, dass die Ringe (38, 58) eine konisch verlaufende Phase bzw. Ausdrehung aufweisen, die konzentrisch zur Dresch- und Trenntrommel (20) ausgerichtet ist, wobei ein Teil (122) der Phase mit einer eine sich radial erstreckende Oberfläche aufweisenden Aussparung versehen ist.

13. Steinfangvorrichtung nach einem oder mehreren der vorherigen Ansprüche, dadurch gekennzeichnet, dass die an der Innenseite des Gehäuses (18) vorgesehenen Führungsleisten (34) die gleiche Höhe wie der aussen liegende Ring (38) aufweisen.

14. Steinfangvorrichtung nach einem oder mehreren der vorherigen Ansprüche, dadurch gekennzeichnet, dass der äussere Ring (38) gegenüber dem inneren Ring (58") in Förderrichtung des Erntegutes axial versetzt ist.

15. Steinfangvorrichtung nach einem oder mehreren der vorherigen Ansprüche, dadurch gekennzeichnet, dass die radiale Ausdehnung des Schlitzes (88) zwischen den beiden Ringen (38, 58") grösser als die axiale Versetzung ist.

16. Steinfangvorrichtung nach einem oder mehreren der vorherigen Ansprüche, dadurch gekennzeichnet, dass die im Gehäuse (18) vorgesehene Auslassöffnung (40) in Förderrichtung gesehen eine vordere Kante (42) und eine hintere Kante (45) aufweist, wobei letztere auf der gleichen Radialebene wie die Stirnseite des äusseren Ringes (38) liegt.

17. Steinfangvorrichtung nach einem oder mehreren der vorherigen Ansprüche, dadurch gekennzeichnet, dass an die Auslassöffnung (40) ein Auffangbehälter zur Aufnahme der Fremdkörper angeschlossen ist, der eine über eine Klappe (72') verschliessbare Auslassöffnung aufweist.

18. Steinfangvorrichtung nach einem oder mehreren der vorherigen Ansprüche, dadurch gekennzeichnet, dass die Auslassöffnung (40) sich in Umfangsrichtung des Gehäuses (18) erstreckt und der Auffangbehälter tangential an das Gehäuse (18) angeschlossen ist.

19. Steinfangvorrichtung nach einem oder mehreren der vorherigen Ansprüche, dadurch gekennzeichnet, dass der Auffangbehälter sich von der Auslassöffnung (40) radial nach aussen erstreckt und seine äussere Wand im Bereich der Gehäusewand (16) des Mähdreschers vorgesehen ist.

20. Steinfangvorrichtung nach einem oder mehreren der vorherigen Ansprüche, dadurch gekennzeichnet, dass die Auslassöffnung (40) im oberen Bereich des Gehäuses (18) angeordnet ist.

21. Steinfangvorrichtung nach einem oder mehreren der vorherigen Ansprüche, dadurch gekennzeichnet, dass das Gehäuse im Querschnitt vier Quadranten bzw. Abschnitte aufweist und die Auslassöffnung in Drehrichtung gesehen im oberen bzw. vierten Quadranten vorgesehen ist.

22. Steinfangvorrichtung nach einem oder mehreren der vorherigen Ansprüche, dadurch gekennzeichnet, dass die Auslassöffnung (40) im Gehäuse (18) ein Bogenmass nicht grösser als 90° aufweist.

23. Steinfangvorrichtung nach einem oder mehreren der vorherigen Ansprüche, dadurch gekennzeichnet, dass zwischen der Innenseite des Gehäuses (18) und dem Aussenumfang des Gehäusemantels sowie den Förderleisten (54) der Dresch- und Trenntrommel (20) ein Förderweg (36) zur Aufnahme der Steine gebildet ist, über den die Steine mittels der Förderleisten (54) zur Auslassöffnung (40) bewegt werden, wobei die axiale Ausdehnung des Förderweges in etwa doppelt so gross ist wie die radiale Ausdehnung des Ringraumes zwischen Dresch- und Trenntrommel (20) und dem Gehäuse (18).

24. Steinfangvorrichtung nach einem oder mehreren der vorherigen Ansprüche, dadurch gekennzeichnet, dass der oder die Ringe (38', 58') über eine Stellvorrichtung (114) verstellbar sind, die über einen im Bereich der Bewegungsbahn des Erntegutes vorgesehenen Geber zur Erfassung von Störgrössen steuerbar ist.

Claims

1. A stone catcher for combine harvesters operating on the axial flow principle having an inclined conveyor housing (12) which is connected to a cylindrical housing (18) for accomodating a threshing and separating drum (20) which at the feed side for the crop material has a conveyor region which is provided with conveyor members (54), the outside periphery of the threshing and separating drum (20) forming an annular gap with the inside of the housing (18), for the passage of the crop material, wherein associated with the stone catcher (14) which is disposed upstream of the region of the threshing and separating drum (20) provided with threshing and separating bars (56) is a displaceable closure device (flap 72) for closing off an opening (60) for the passage of the foreign bodies, characterised in that disposed upstream of the annular gap is an apparatus (38, 58) for retaining foreign bodies, the apparatus (38, 58) having a smaller passage cross-section than the annular gap and the foreign bodies being repelled by way of the apparatus (38, 58) and passed to conveyor members (54) arranged on the threshing and separating drum (20), the conveyor members moving the foreign bodies centrifugally through the opening (60).

2. A stone catcher according to claim 1 characterised in that the passage cross-section of the apparatus for retaining foreign bodies is formed by an annular slot (88) which is disposed in a radially extending plane extending perpendicularly to the longitudinal axis of the threshing and separating drum (20).

3. A stone catcher according to claim 1 or claim 2 characterised in that the slot (88) is the same height in the radial direction over the entire periphery.

4. A stone catcher according to one or more of the preceding claims characterised in that at least one part, which forms the slot (88), of the apparatus for retaining foreign bodies, is radially and concentrically adjustable.

5. A stone catcher according to one or more of the preceding claims characterised in that the apparatus for retaining foreign bodies is formed from an inner and an outer ring or stone collar (38, 58), wherein the outer ring (38) is adjustable by way of an adjusting means (114).

6. A stone catcher according to one or more of the preceding claims characterised in that the outer ring (38) is displaceable in the radial direction by way of the adjusting means (114) to such an extent that its inward edge (86) is flush with the inside surface of the housing portion (30).

7. A stone catcher according to one or more of the preceding claims characterised in that the inner ring (58) is fixed on the threshing and separating drum (20) and the outer ring (38) is fixed on the housing (18), the two rings (38, 58) being provided in the region of the transition between a conical intake portion (50) and the cylindrical portion of the threshing and separating drum.

8. A stone catcher according to one or more of the preceding claims characterised in that the conveyor members or conveyor bars (54) provided on the intake portion (50) of the threshing and separating drum (20) extend in a downstream direction behind the rings (38, 58) into the cylindrical part of the housing portion (30) of the threshing and separating drum (20).

9. A stone catcher according to one or more of the preceding claims characterised in that the slot (88) formed by the rings (38, 58) decreases in cross-section as considered in the direction of conveying movement or in the downstream direction.

10. A stone catcher according to one or more of the preceding claims characterised in that the two rings (38, 58) have oppositely disposed edges (84, 86) which form the slot (88), the edges lying in a radial plane which intersects the longitudinal axis of the threshing and separating drum (20) at a right angle.

11. A stone catcher according to one or more of the preceding claims characterised in that the two radially extending, concentrically disposed rings (38, 58) are mounted displaceably individually or jointly, wherein the radial extent of the inner ring (58) which is disposed on the threshing and separating drum (20) is greater than the radial extent of the ring (38) which is disposed on the housing (18).

12. A stone catcher according to one or more of the preceding claims characterised in that the rings (38, 58) have a conically extending phase or bore portion which is arranged concentrically with respect to the threshing and separating drum (20), wherein a part (122) of the phase is provided with a recess having a radially extending surface.

13. A stone catcher according to one or more of the preceding claims characterised in that the guide bars (34) provided at the inside of the housing (18) are of the same height as the outward ring (38).

14. A stone catcher according to one or more of the preceding claims characterised in that the outer ring (38) is axially displaced in the direction of conveying movement of the crop material, with respect to the inner ring (58").

15. A stone catcher according to one or more of the preceding claims characterised in that the radial extent of the slot (88) between the two rings (38, 58") is greater than the axial displacement.

16. A stone catcher according to one or more of the preceding claims characterised in that the outlet opening (40) in the housing (18), as considered in the direction of conveying movement, has an upstream edge (42) and a downstream edge (45), the latter being disposed in the same radial plane as the face of the outer ring (38).

17. A stone catcher according to one or more of the preceding claims characterised in that connected to the outlet opening (40) is a collecting container for receiving the foreign bodies, which container has an outlet opening which can be closed by way of a flap (72').

18. A stone catcher according to one or more of the preceding claims characterised in that the outlet opening (40) extends in the peripheral direction of the housing (18) and the collecting container is connected tangentially to the housing (18).

19. A stone catcher according to one or more of the preceding claims characterised in that the collecting container extends radially outwardly from the outlet opening (40) and the outer wall thereof is provided in the region of the housing wall (16) of the combine harvester.

20. A stone catcher according to one or more of the preceding claims characterised in that the outlet opening (40) is disposed in the upper region of the housing (18).

21. A stone catcher according to one or more of the preceding claims characterised in that the housing has four quadrants or portions in cross-section and the outlet opening, as considered in the direction of rotation, is provided in the upper or fourth quadrant.

22. A stone catcher according to one or more of the preceding claims characterised in that the outlet opening (40) in the housing (18) has an arcuate dimension of not greater than 90°.

23. A stone catcher according to one or more of the preceding claims characterised in that formed between the inside of the housing (18) and the outside periphery of the housing shell and the conveyor bars (54) on the threshing and separating drum (20) is a conveyor path (36) for receiving the stones, by way of which the stones are moved to the outlet opening (40) by means of the conveyor bars (54), the axial extent of the conveyor path being approximately double the radial extent of the annular space between the threshing and separating drum (20) and the housing (18).

24. A stone catcher according to one or more of the preceding claims characterised in that the ring or rings (38', 58') is or are adjustable by way of an adjusting device (114) which is controllable by way of a sender provided in the region of the path of movement of the crop material, for detecting disturbances.

**Revendications**

1. Dispositif d'arrêt des pierres pour moissonneuse-batteuse fonctionnant selon le principe de l'acheminement axial des produits de récolte, comportant un carter de transporteur incliné (12) qui est raccordé à un carter cylindrique (18) devant recevoir un rotor de battage et de séparation (20) qui comporte du côté d'amenée des produits de récolte une zone de transport comportant des organes de transport (54) et dont la périphérie extérieure forme, avec la face intérieure du carter (18), un intervalle annulaire pour le passage des produits de récolte, un dispositif obturateur déplaçable (volet 72) servant à obturer un orifice (60) de passage des corps étrangers étant conjugué au dispositif d'arrêt des pierres (14) placé en avant de la zone du rotor de battage et de séparation comportant des barres de battage et de séparation (56), caractérisé en ce qu'il est prévu devant la fente annulaire un dispositif (38, 58) destiné à retenir les corps étrangers, présentant une section de passage plus petite que la fente annulaire, grâce auquel les corps étrangers sont détournés et dirigés vers des organes transporteurs (54) placés sur le rotor de battage et de séparation (20), qui, par effet centrifuge, font passer les corps étrangers par l'orifice (60).

2. Dispositif d'arrêt des pierres selon la revendication 1, caractérisé en ce que la section de passage du dispositif de retenue des corps étrangers est formé par une fente annulaire (88) placée dans un plan radial orthogonal à l'axe longitudinal du rotor de battage et de séparation (20).

3. Dispositif d'arrêt des pierres selon la revendication 1 ou 2, caractérisé en ce que la fente (88) présente une hauteur uniforme, en direction radiale, sur toute la périphérie.

4. Dispositif d'arrêt des pierres suivant l'une ou plusieurs des revendications précédentes, caractérisé en ce qu'au moins une partie du dispositif de retenue des corps étrangers formant la fente (88) est réglable radialement et concentriquement.

5. Dispositif d'arrêt des pierres suivant l'une ou plusieurs des revendications précédentes, caractérisé en ce que le dispositif servant à retenir les corps étrangers est constitué par couronnes ou collerettes pare-pierres intérieure et extérieure (38, 58), la couronne extérieure (38) étant déplaçable au moyen d'un dispositif de réglage (114).

6. Dispositif d'arrêt des pierres suivant l'une ou plusieurs des revendications précédentes, caractérisé en ce que la couronne extérieure (38) est déplaçable radialement par l'intermédiaire du dispositif de réglage (114) à un degré tel que son bord (86) dirigé vers l'intérieur réalise une obturation avec la surface intérieure de la partie (30) du carter.

7. Dispositif d'arrêt des pierres suivant l'une ou plusieurs des revendications précédentes, caractérisé en ce que la couronne intérieure (58) est fixée sur le rotor de battage et de séparation (20), tandis que la couronne extérieure (38) est fixée sur le carter (18), les deux couronnes (38, 58) étant prévues dans la zone de transition entre une partie d'entrée conique (50) et la partie cylindrique du rotor de battage et de séparation.

8. Dispositif d'arrêt des pierres suivant l'une ou plusieurs des revendications précédentes, caractérisé en ce que les organes ou barrettes de transport (54) prévus sur la partie d'entrée (50) du rotor de battage et de séparation se prolongent en aval derrière les couronnes (38, 58), dans la portion cylindrique de la partie (30) du carter et du rotor de battage et de séparation (20).

9. Dispositif d'arrêt des pierres suivant l'une ou plusieurs des revendications précédentes, caractérisé en ce que la fente ou l'intervalle annulaire (88) formé par les couronnes (38, 58) a une section droite allant en diminuant dans le sens de transport ou en direction de l'aval.

10. Dispositif d'arrêt des pierres suivant l'une ou plusieurs des revendications précédentes, caractérisé en ce que les deux couronnes (38, 58) présentent des bords ou arêtes opposés (84, 86) qui définissent la fente ou l'intervalle annulaire (88), ces bords se trouvant dans un plan radial qui coupe à angle droit l'axe longitudinal du rotor de battage et de séparation (20).

11. Dispositif d'arrêt des pierres suivant l'une ou plusieurs des revendications précédentes, caractérisé en ce que les deux couronnes concentriques (38, 58) s'étendant radialement sont montées de façon déplaçable individuellement ou conjointement, l'étendue radiale de la couronne intérieure (58) disposée sur le rotor de battage et de séparation (20) étant supérieure à l'étendue radiale de la couronne (38) disposée sur le carter (18).

12. Dispositif d'arrêt des pierres suivant l'une ou plusieurs des revendications précédentes, caractérisé en ce que les couronnes (38, 58) présentent une dépouille ou un chanfrein conique orienté concentriquement au rotor de battage et de séparation (20), une partie (122) de cette dépouille étant munie d'un évidement présentant une surface orientée radialement.

13. Dispositif d'arrêt des pierres suivant l'une ou plusieurs des revendications précédentes, caractérisé en ce que les barrettes de guidage (34) prévues sur la face intérieure du carter (18) ont la même hauteur que la couronne extérieure (38).

14. Dispositif d'arrêt des pierres suivant l'une ou plusieurs des revendications précédentes, caractérisé en ce que la couronne extérieure (38) est décalée axialement dans le sens de transport des produits de récolte par rapport à la couronne intérieure (58'').

15. Dispositif d'arrêt des pierres suivant l'une ou plusieurs des revendications précédentes, caractérisé en ce que l'étendue radiale de l'intervalle annulaire ou de la fente (88) ménagé entre les deux couronnes (38, 58") est supérieure au décalage axial.

16. Dispositif d'arrêt des pierres suivant l'une ou plusieurs des revendications précédentes, caractérisé en ce que l'orifice d'évacuation (40) prévu dans le carter (18) présente, dans le sens de transport, un bord avant (42) et un bord arrière (45), ce dernier se trouvant dans le même plan radial que la face terminale de la couronne extérieure (38).

17. Dispositif d'arrêt des pierres suivant l'une ou plusieurs des revendications précédentes, caractérisé en ce qu'un réceptacle collecteur est raccordé à l'orifice d'évacuation (40) pour la réception des corps étrangers, ce réceptacle présentant un orifice d'évacuation pouvant être fermé par un volet (72').

18. Dispositif d'arrêt des pierres suivant l'une ou plusieurs des revendications précédentes, caractérisé en ce que l'orifice d'évacuation (40) s'étend dans le sens circonférentiel du carter (18) et en ce que le réceptacle collecteur est raccordé tangentiellement au carter (18).

19. Dispositif d'arrêt des pierres suivant l'une ou plusieurs des revendications précédentes, caractérisé en ce que le réceptacle collecteur s'étend radialement vers l'extérieur depuis l'orifice d'évacuation (40) et en ce que sa paroi extérieure est prévue au voisinage de la paroi (16) du corps de la moissonneuse-batteuse.

20. Dispositif d'arrêt des pierres suivant l'une ou plusieurs des revendications précédentes, caractérisé en ce que l'orifice d'évacuation (40) est disposé dans la partie supérieure du carter (18).

21. Dispositif d'arrêt des pierres suivant l'une ou plusieurs des revendications précédentes, caractérisé en ce que le carter comporte, en section droite, quatre quadrants ou sections, et en ce que l'orifice d'évacuation est prévu, quand on considère les sens de rotation, dans le premier ou le quatrième quadrant.

22. Dispositif d'arrêt des pierres suivant l'une ou plusieurs des revendications précédentes, caractérisé en ce que l'orifice d'évacuation (40) présente, dans le carter (18), une longueur d'arc qui ne dépasse pas 90°.

23. Dispositif d'arrêt des pierres suivant l'une ou plusieurs des revendications précédentes, caractérisé en ce qu'un trajet de transport pour la réception des pierres est formé entre la face intérieure du carter (18) et la périphérie extérieure de l'enveloppe ainsi que les barrettes de transport (54) du rotor de battage et de séparation (20), les pierres étant acheminées par ce trajet en direction de l'orifice d'évacuation (40) par les barrettes de transport (54), l'étendue axiale du trajet de transport étant sensiblement égale au double de l'étendue radiale de la cavité annulaire ménagée entre le rotor de battage et de séparation (20) et le carter (18).

24. Dispositif d'arrêt des pierres suivant l'une ou plusieurs des revendications précédentes, caractérisé en ce que la ou les couronnes (38', 58') est ou sont déplaçables au moyen d'un dispositif de réglage qui peut être commandé par un émetteur servant à détecter les grandeurs perturbatrices, prévu au voisinage du trajet d'acheminement des produits de récolte.

FIG. 1

FIG. 2

FIG. 5

FIG. 7

FIG. 6

FIG. 3

FIG. 4

FIG. 8